# DEMANDE DE BREVET EUROPEEN

(11) **EP 2 514 489 A1**
(43) Date de publication de la demande: **24.10.2012**
(21) Numéro de dépôt: 12176608.3
(22) Date de dépôt: 01.07.2009
(51) Int. Cl.: A62C 2/14, F16L 5/04, F24F 13/10

(54) **Ensemble coupe-feu à montage symétrique**

(30) Priorité: 01.07.2008 FR 0854431
(62) Demande divisionnaire de: 09164292.6
(71) Demandeur: Stik Industries, 89100 Fron (FR)
(72) Inventeur: Eidmann, Jürgen Fritz, 61348 Bad Homburg (DE); Wepierre, Karine, 88190 Foissy Sur Vanne (FR)
(74) Mandataire: Nony

(57) **Abrégé**

La présente invention concerne une cartouche (3) coupe-feu comportant :
- un organe d'obturation (8A, 8B) mobile entre une position d'ouverture et une position de fermeture, et
- une poignée (23) s'étendant, dans la position d'ouverture, dans le prolongement dudit organe d'obturation.

## Description

### Domaine technique

L'invention concerne un ensemble coupe-feu pour réseau aéraulique.

### Etat de la technique

Un ensemble coupe-feu est classiquement inséré dans un réseau aéraulique à des endroits où ce réseau aéraulique traverse une « cloison », par exemple un mur, un plancher ou un plafond. L'ensemble coupe-feu se ferme en cas d'incendie afin d'en éviter la propagation à travers le réseau aéraulique.

FR 2 754 460 divulgue un ensemble coupe-feu comportant une coquille, ou « collerette », en forme de manchon que l'on scelle dans la cloison à traverser et dans laquelle on monte une cartouche coupe-feu. La cartouche comporte deux volets qui, en veille, sont maintenus dans une position d'ouverture, à l'encontre d'un ressort, par une attache fusible. En cas d'incendie, cette attache fusible cède afin que les volets se rabattent dans une position de fermeture de manière à obturer le réseau.

Cet ensemble coupe-feu ne permet pas un positionnement axial aisé de la cartouche selon la direction normale à la cloison.

Par ailleurs, FR 2 754 460 préconise un positionnement centré de la coquille par rapport à la cloison alors que, après assemblage de la cartouche dans la coquille, les volets ne s'étendent pas dans le plan transversal médian de la coquille : Après scellement de la coquille dans la cloison, les volets ne s'étendent donc pas dans le plan médian de la cloison. Leur position axiale dépend donc du sens de montage de la coquille dans la cloison. Le risque d'erreur de positionnement est donc élevé.

L'invention vise à résoudre, au moins partiellement, un ou plusieurs des problèmes mentionnés ci-dessus.

### Résumé de l'invention

A cet effet, sous un premier aspect, l'invention concerne un ensemble coupe-feu comportant une cartouche coupe-feu pourvue d'un organe d'obturation, classiquement sous la forme d'un ou plusieurs volets d'obturation, généralement plan(s), et une coquille de montage de ladite cartouche, cet ensemble étant remarquable en ce qu'il comporte des moyens de butée aptes à bloquer axialement la cartouche dans la coquille dans une position, dite « position centrale », telle que ledit organe d'obturation de ladite cartouche s'étend, dans une position de fermeture où il obture ladite cartouche, dans un plan transversal à mi-longueur de la coquille.

Par « blocage axial », on entend que les moyens de butée limitent le déplacement de la cartouche suivant l'axe de la coquille.

Ce mode de réalisation est particulièrement avantageux puisqu'il permet, en cas de positionnement centré de la coquille dans la cloison, un comportement au feu identique que le foyer d'incendie soit situé en amont ou en aval de l'ensemble coupe-feu. En outre, l'ensemble coupe-feu peut être indifféremment inséré dans la cloison par l'une ou l'autre des extrémités de la coquille, ce qui limite le risque d'erreur de positionnement au montage.

Les moyens de butée sont de préférence portés par la coquille et/ou la cartouche.

Ces moyens de butée peuvent en particulier comporter une protubérance faisant saillie à partir de la surface intérieure de la coquille ou en dépression (en creux) par rapport à cette surface. Cette protubérance peut notamment se présenter sous la forme d'un ergot ou d'un pion, ou encore d'un bourrelet annulaire.

De préférence, la section transversale du bourrelet est section rectangulaire. Une telle forme est avantageusement facile à fabriquer et efficace pour assurer une butée de la cartouche et, le cas échéant, une coopération efficace avec des moyens de clipsage.

Les moyens de butée peuvent comporter une cavité, par exemple sous la forme d'une rainure annulaire, ménagée à la surface intérieure de la coquille et coopérant avec un doigt, une patte ou une griffe monté élastiquement sur la cartouche.

Les moyens de butée peuvent être configurés pour bloquer le déplacement axial de la cartouche dans la coquille dans un sens ou, de préférence, dans les deux sens. Dans ce dernier cas, ils constituent des moyens de fixation de la cartouche.

De préférence les moyens de blocage sont désactivables, de préférence sans outil, et de préférence encore par simple traction axiale sur la cartouche. Les opérations de maintenance en sont simplifiées.

La cartouche et/ou la coquille peuvent en particulier comporter des pattes de clipsage élastiques, de préférence désactivables. De préférence, ces pattes sont adaptées pour coopérer avec une protubérance ou une cavité de la coquille, notamment à la surface intérieure de la coquille ou de la cartouche respectivement. Le montage de la cartouche en est simplifié puisqu'il suffit d'enfoncer la cartouche dans la coquille jusqu'à activation des pattes de clipsage pour fixer la cartouche. La protubérance ou la cavité sont de préférence annulaires, de manière que les pattes de clipsage puissent être activées indépendamment de la position angulaire de la cartouche autour de son axe.

Les pattes de clipsage peuvent être du type de celles décrites dans FR 2 754 460 et/ou être fixées sur la cartouche comme décrit dans FR 2 754 460.

La coquille peut être notamment de forme tubulaire, le volume intérieur étant sensiblement cylindrique, de préférence de section circulaire. De préférence, sa surface extérieure est également cylindrique de section circulaire et, de préférence, d'un diamètre sensiblement identique au diamètre intérieur des conduits du réseau aéraulique à raccorder.

La coquille peut être notamment réalisée en ciment, en silicate de calcium ou en métal.

Des moyens d'accrochage peuvent être prévus pour rendre plus fiable le scellement de la coquille dans la cloison. Par exemple des pattes de scellement peuvent être fixées, notamment par rivetage, à la surface extérieure de la coquille. Des variations locales du diamètre extérieur de la coquille, par exemple un bourrelet annulaire extérieur, peuvent également être ménagées, par usinage ou emboutissage par exemple.

De préférence, l'ensemble coupe-feu comporte des moyens détrompeurs marquant une position centrée de la coquille par rapport au plan médian de la cloison dans laquelle la coquille est fixée.

On considère que les moyens détrompeurs « indiquent » ou « marquent » une position lorsqu'ils fournissent à l'utilisateur au moins une information claire et utile pour atteindre cette position. Le marquage peut indiquer différentes positions correspondant à différentes épaisseurs de cloison.

De préférence, les moyens détrompeurs sont fixés sur la coquille.

Les moyens détrompeurs peuvent notamment comprendre un marquage, de préférence à la surface extérieure de la coquille, par exemple sous la forme d'un autocollant, d'une marque imprimée, d'un relief, en particulier d'un bourrelet, ou d'un renfoncement, par exemple d'une rainure. Ce marquage peut notamment comprendre des traits, notamment des graduations, des flèches, des couleurs et/ou des caractères alphanumériques.

De préférence, les moyens détrompeurs sont adaptés à différentes épaisseurs de cloison. Par exemple, ils se présentent sous la forme d'une règle graduée. Les graduations peuvent correspondre à des épaisseurs de cloison normalisées. La graduation « 0 » de la règle peut notamment être disposée à mi-longueur de la coquille. Des graduations peuvent s'étendre de chaque côté de la graduation « 0 ».

Les moyens détrompeurs peuvent également indiquer l'extrémité de la coquille, dit « côté de révision », par laquelle la cartouche peut être introduite et extraite de la coquille. Cette indication peut être notamment apportée par une couleur, un texte, un pictogramme, par exemple une flèche.

Dans un mode de réalisation préféré, les moyens détrompeurs ne font sensiblement pas saillie radialement au-delà de la surface extérieure de la coquille. Ils ne s'opposent donc pas au déplacement axial de la coquille dans une ouverture de la cloison autorisant une insertion de la coquille.

Dans un autre mode de réalisation au contraire, les moyens détrompeurs font saillie à partir de la surface extérieure de la coquille. Ainsi par exemple, lorsque cette surface est cylindrique et que la coquille est introduite à l'intérieur d'une ouverture cylindrique traversant ladite cloison et de diamètre légèrement supérieur au diamètre extérieur de la coquille, les moyens détrompeurs peuvent entrer en butée avec la face de la cloison par laquelle la coquille a été introduite dans cette ouverture.

De préférence, la cartouche comporte deux volets semi-circulaires admettant une position d'ouverture où ils sont parallèles à l'axe de la cartouche et une position de fermeture où ils sont de préférence transversaux à cet axe. De préférence encore, la cartouche comporte, pour solliciter lesdits volets vers la position de fermeture, au moins un ressort spiral monté autour d'un tourillon d'articulation desdits volets. L'utilisation de ce type de ressort est particulièrement avantageuse, notamment en ce qui concerne l'encombrement, les coûts et les performances en matière d'effort de fermeture fourni.

De préférence, la cartouche comporte une poignée facilitant sa manipulation, voire son extraction hors de la coquille pour les opérations de maintenance. De préférence, la poignée présente la forme d'une tige, de préférence rigide, par exemple en métal et notamment en inox. Les deux extrémités de la poignée sont de préférence fixées à la surface intérieure du corps de la cartouche, de préférence du côté des volets par lequel la cartouche peut être extraite de la coquille.

De préférence encore, la poignée s'étend, dans la position d'ouverture, au moins en partie dans le prolongement de l'organe d'obturation, et en particulier dans le plan d'un des volets et parallèlement à ce plan. Les volets s'étendant classiquement, dans la position d'ouverture, de part et d'autre d'un plan médian de la cartouche, et à égale distance de ce dernier, la poignée ne s'étend alors pas suivant un diamètre de la cartouche. De préférence encore, l'épaisseur de la tige est inférieure à deux fois, voire inférieure à 1,5 fois, 1,2 fois, voire 1 fois, 0,9 fois ou 0,8 fois l'épaisseur dudit volet. Le volet peut ainsi « masquer », au moins partiellement la poignée, ou réciproquement, selon le sens de circulation de l'air. La perte de charge induite par la poignée et le volet est avantageusement minimale en situation de veille.

Selon une variante, dans un plan de projection perpendiculaire au plan dudit volet dans la position d'ouverture, au moins 50 %, voire au moins 70 %, voire au moins 90 %, voire 100 % de la surface de la projection de la poignée est inclus dans la projection dudit volet.

La forme de la cartouche n'est pas limitée. La cartouche peut notamment être une cartouche d'un type connu, de préférence conforme aux standards, la coquille étant adaptée en conséquence.

De préférence, la cartouche est pré montée dans la coquille en usine, avant d'être livrée.

Sous un deuxième aspect, l'invention concerne un ensemble coupe-feu comportant une cartouche coupe-feu pourvue d'un organe d'obturation, classiquement sous la forme d'un ou plusieurs volets d'obturation, et une coquille de montage de ladite cartouche dans une cloison, cet ensemble étant remarquable en ce qu'il comporte
- des moyens de butée aptes à bloquer axialement la cartouche dans la coquille, et
- des moyens détrompeurs marquant une position de la coquille par rapport à un plan médian de ladite cloison, ladite position étant telle que, lorsque la cartouche est bloquée axialement dans la coquille par les moyens de butée, ledit organe d'obturation de ladite cartouche s'étend, dans une position de fermeture où il obture ladite cartouche, de manière sensiblement symétrique par rapport à un plan médian de ladite cloison.

Lorsque l'organe d'obturation est sensiblement plan dans la position de fermeture, il s'étend donc dans le plan médian de la cloison.

A la différence de l'ensemble coupe-feu selon le premier aspect de l'invention, la position de blocage de la cartouche dans la coquille ne correspond pas nécessairement à une position « centrale » telle que les volets s'étendent, dans la position de fermeture, dans un plan transversal à mi-longueur de la coquille, et il n'est pas nécessaire que la coquille soit centrée par rapport au plan médian de la cloison (c'est-à-dire que son plan transversal médian soit confondu avec le plan médian de la cloison) pour que l'ensemble coupe-feu puisse être monté indifféremment dans un sens ou dans l'autre.

Ainsi, il est possible, par exemple, de prévoir des ensembles coupe-feu qui, après assemblage, dépassent plus d'un côté de la cloison que de l'autre côté. Les moyens détrompeurs permettent avantageusement à l'utilisateur de s'assurer qu'en dépit de l'asymétrie du positionnement de la coquille, le plan des volets s'étend selon le plan médian de la cloison dans la position de fermeture. De préférence, la coquille et/ou la cartouche et/ou les moyens détrompeurs selon le deuxième aspect de l'invention comportent une ou plusieurs des caractéristiques de la coquille et/ou de la cartouche et/ou des moyens détrompeurs décrits sous le premier aspect de l'invention.

Sous un troisième aspect, l'invention concerne une cartouche, et en particulier une cartouche pouvant être montée dans un ensemble coupe-feu selon l'invention, ladite cartouche comportant :
- un organe d'obturation mobile entre une position d'ouverture et une position de fermeture, et
- une poignée s'étendant, dans la position d'ouverture, dans le prolongement dudit organe d'obturation. En particulier, lorsque ledit organe d'obturation comporte un volet plan, la poignée s'étend de préférence suivant le plan dudit volet.

Avantageusement, cette configuration de la poignée limite la perte de charge au passage à travers la cartouche.

La cartouche peut encore comporter une ou plusieurs caractéristiques de la cartouche décrite dans le cadre des premier et deuxième aspects de l'invention.

L'invention vise également sous un quatrième aspect, un procède de montage d'un ensemble coupe-feu dans une cloison, ledit ensemble coupe-feu comportant une cartouche coupe-feu pourvue d'un organe d'obturation et une coquille de montage de ladite cartouche dans ladite cloison, ce procède étant remarquable en ce qu'il comporte les étapes suivantes:
a) scellement de la coquille dans ladite cloison ;
b) montage, de préférence par clipsage, d'une cartouche dans ladite coquille, cette étape pouvant également précéder l'étape a) ; et
c) optionnellenent, raccordement d'au moins un conduit aéraulique à au moins une extrémité de ladite coquille ;

la coquille étant scellée dans la cloison et la cartouche étant positionnée dans la coquille de manière que, dans une position de fermeture où ledit organe d'obturation obture ladite cartouche, ledit organe d'obturation s'étend de manière sensiblement symétrique par rapport au plan médian de ladite cloison.

L'ensemble coupe-feu peut en particulier être un ensemble coupe-feu selon l'invention. Ainsi, à l'étape a), la coquille est centrée si l'ensemble coupe-feu est conforme au premier aspect de l'invention ou est positionnée conformément aux indications fournies par les moyens détrompeurs si l'ensemble coupe-feu est conforme au deuxième aspect de l'invention.

Classiquement, à l'étape a), la coquille est scellée de manière que son axe soit sensiblement perpendiculaire au plan médian de la cloison.

Dans le mode de réalisation préféré de l'invention, l'organe d'obturation comporte des volets, la coquille est scellée en position centrée dans la cloison et comporte des moyens de blocage du déplacement axial de la cartouche dans la coquille dans une position centrale par rapport à la coquille, c'est-à-dire telle que les volets, dans la position de fermeture, s'étendent dans un plan transversal à mi-longueur de la coquille.

L'invention concerne encore, sous un cinquième aspect, une coquille destinée au montage d'une cartouche coupe-feu pourvue d'un organe d'obturation, ladite coquille comportant des moyens détrompeurs marquant une position centrée de la coquille par rapport à un plan médian d'une cloison dans laquelle ladite coquille est destinée à être fixée.

La coquille et/ou la cartouche peuvent encore comporter une ou plusieurs des caractéristiques de la coquille et/ou de la cartouche, respectivement, décrites dans le cadre des autres aspects de l'invention.

L'invention concerne enfin une cloison dans laquelle une coquille selon l'invention est fixée dans une position centrée par rapport au plan médian de ladite cloison.

### Brève description des figures

D'autres caractéristiques et avantages de l'invention apparaîtront encore à la lecture de la description détaillée qui va suivre et à l'examen des dessins annexés dans lesquels :
- la figure 1 est une vue en coupe d'un ensemble coupe-feu selon le premier aspect de l'invention, l'un des volets de la cartouche étant montré en position d'ouverture et l'autre en position de fermeture, cette vue étant prise suivant un plan correspondant à celui repéré par I-I sur la figure 2;
- la figure 2 est une vue en coupe d'une variante de la cartouche coupe-feu montrée sur la figure 1, suivant un plan correspondant à celui repéré par II-II sur la figure 1;
- les figures 3 et 4 sont respectivement une vue en plan et une vue de côté d'une des pattes de clipsage que comporte cette cartouche coupe-feu ;
- la figure 5 est une vue en coupe montrant un ensemble coupe-feu conforme à l'invention en place dans un réseau aéraulique ;
- la figure 6 est une vue de dessus de l'ensemble coupe-feu représenté sur la figure 1 ;
- la figure 7 est une vue de dessus d'un ensemble coupe-feu selon le deuxième aspect de l'invention ;
- la figure 8 est une vue en coupe longitudinale d'une variante de coquille de montage d'un ensemble coupe-feu selon l'invention ; et
- les figures 9 et 10 représentent des détails, en coupe transversale, de la coquille de la figure 8.

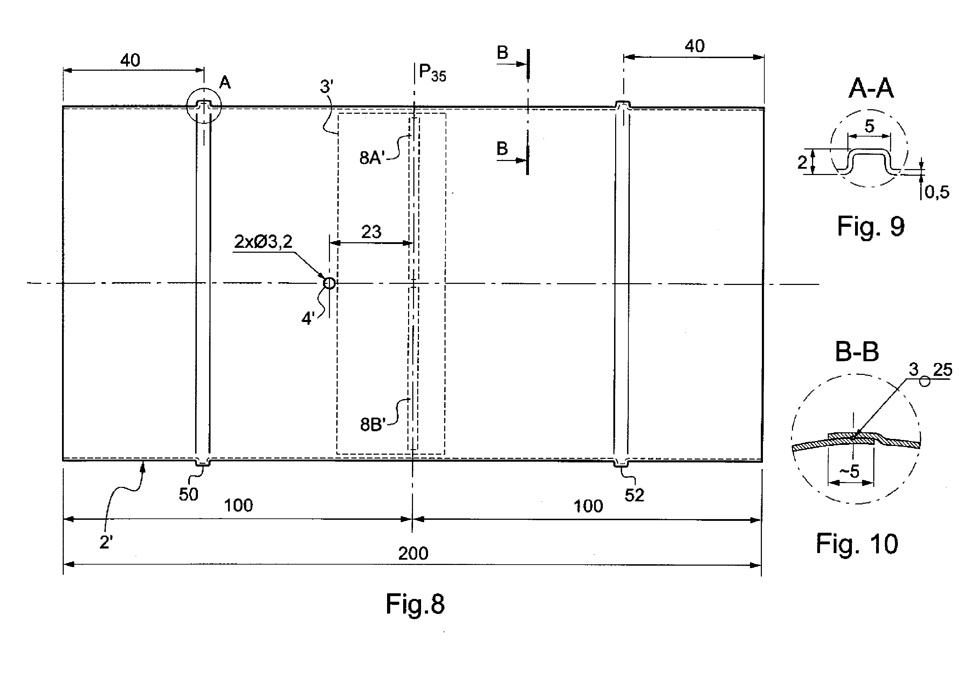

Sur les figures 8 à 10, les mesures, en mm, ne sont fournies qu'à titre illustratif.

### Description détaillée

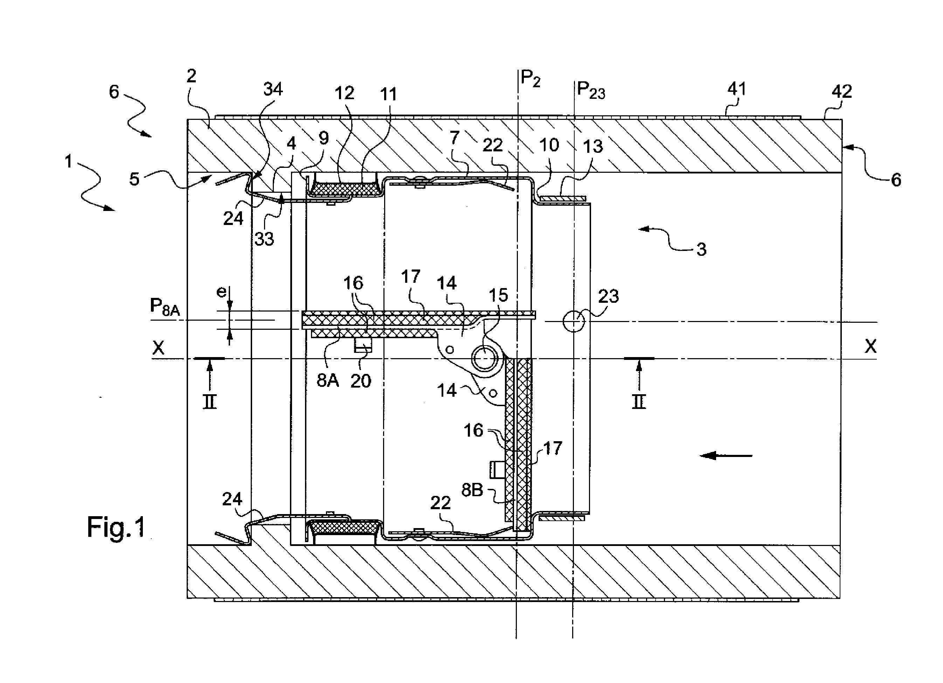

L'ensemble coupe-feu 1 montré sur la figure 1 comporte une coquille 2 et une cartouche 3 coupe-feu montée par clipsage dans cette coquille, où il est prévu que l'air circule de l'extrémité que l'on voit à droite vers celle que l'on voit à gauche, ainsi que montré par une flèche.

La coquille 2 a la forme générale d'un manchon circulaire. Un bourrelet 4 annulaire interne, de section rectangulaire, fait saillie par rapport à la surface intérieure 5 de la paroi latérale de la coquille.

La coquille 2 présente un diamètre extérieur constant et un diamètre intérieur également constant (il est le même de part et d'autre du bourrelet 4) tandis que ses surfaces d'extrémité 6 sont droites.

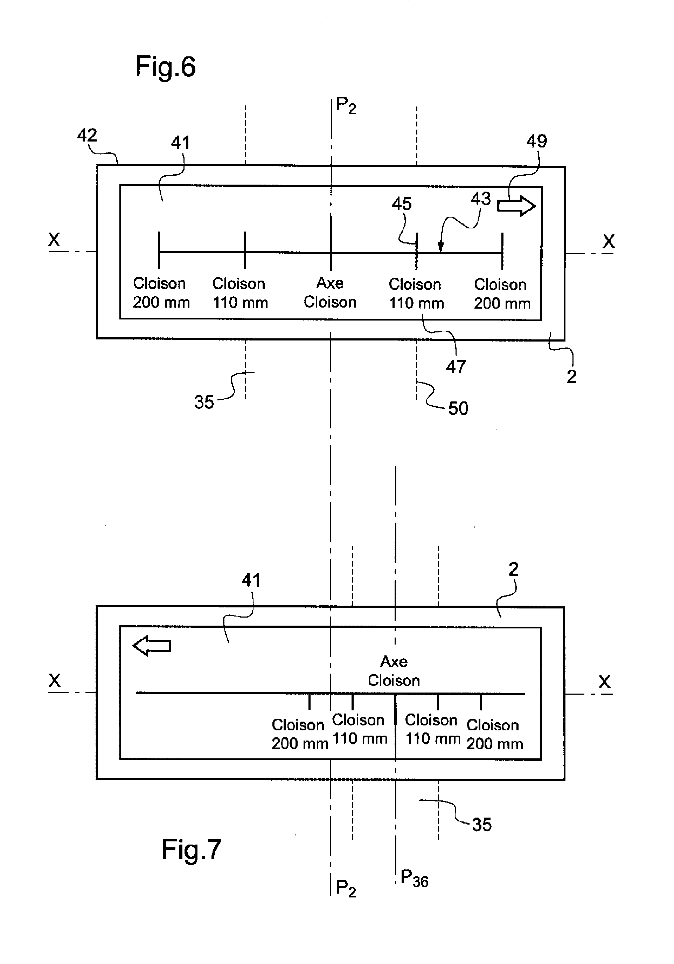

Comme représenté sur la figure 6, un autocollant 41 est collé à la surface extérieure 42 de la coquille 2. Cet autocollant porte des indications permettant de garantir le centrage de la coquille par rapport au plan médian de cloisons présentant différentes épaisseurs.

L'autocollant 41 porte notamment une règle 43 centrée sur le plan médian P₂ de la coquille 2. Cette règle porte des graduations 45 correspondant à différentes épaisseurs de cloison, une indication 47 indiquant sous chaque graduation 45 l'épaisseur de la cloison à laquelle cette graduation 45 correspond.

L'autocollant 41 porte également une flèche 49 indiquant le côté de révision, c'est-à-dire l'extrémité de la coquille par laquelle il est possible d'introduire la cartouche 3 dans la coquille 2 et d'extraire la cartouche 3 hors de la coquille 2.

La coquille 2 de la figure 6 est représentée dans la position centrée par rapport à une cloison 35. Autrement dit, le plan transversal P₂ de la coquille se confond avec le plan médian de la cloison 35.

L'autocollant 41 constitue un moyen détrompeur très efficace. En effet, lors de l'insertion de la coquille 2 à travers la cloison 35, il suffit à l'utilisateur d'aligner la graduation 45 correspondant à l'épaisseur de la cloison 35 avec une des faces 50 de cette cloison pour s'assurer du positionnement centré de la coquille 2, et donc, indirectement, du positionnement des volets 8A et 8B dans le plan médian de la cloison 35 dans la position de fermeture.

L'axe de la règle 43 est parallèle à l'axe X-X de la coquille.

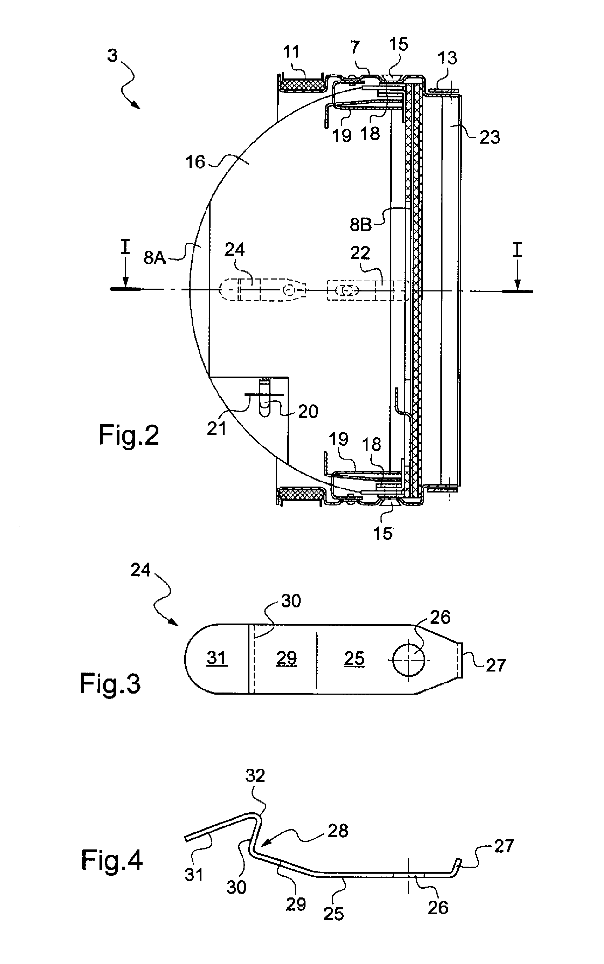

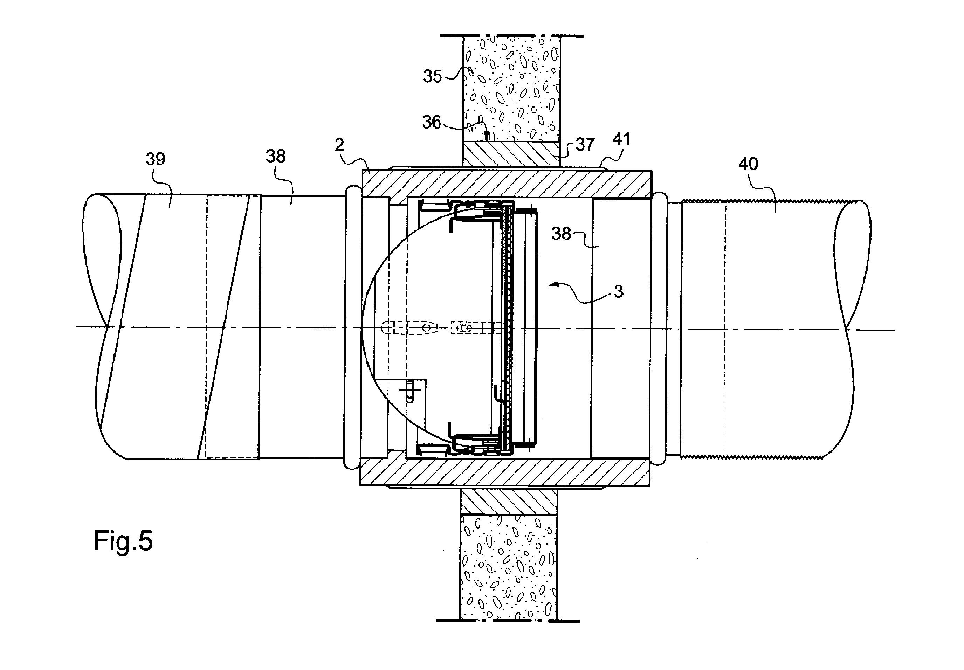

Les cartouches coupe-feu montrées respectivement sur la figure 1 et sur les figures 2 et 5 ont exactement la même constitution, si ce n'est que le corps de la cartouche montrée sur la figure 1 est proportionnellement plus long (par rapport à son diamètre) que celui montré sur les figures 2 et 5.

Afin de simplifier la description, on ne fera aucune distinction entre ces cartouches dans ce qui suit.

La cartouche 3 comporte un corps 7 et un organe d'obturation monté sur le corps. L'organe d'obturation comporte deux volets 8A et 8B qui, en service normal, sont retenus dans une position d'ouverture où ils sont parallèles à l'axe du corps 7 de sorte que l'air circulant dans le réseau peut traverser le corps 7 (position qu'a le volet 8A sur les dessins), alors qu'au-delà d'un certain seuil de température (par exemple 70°C), ils prennent tous deux une position de fermeture où ils sont transversaux par rapport à l'axe du corps 7 afin que l'air, voire les flammes, ne puisse plus passer à travers la cartouche 3 (position du volet 8B sur les dessins).

Le corps 7 a la forme générale d'un tube circulaire, mais présente une gorge externe 9 à l'extrémité aval et un rétreint 10 à l'extrémité amont. Le diamètre extérieur du corps 7 est légèrement inférieur au diamètre intérieur de la coquille 2.

Un joint à lèvres 11 permettant d'assurer l'étanchéité par rapport à la surface intérieure 5 de la paroi latérale de la coquille 2 est disposé dans la gorge 9. Il est recouvert d'une bande de matière intumescente 12, c'est-à-dire qui gonfle à la chaleur. Une bande de matière intumescente 13 est également disposée dans le rétreint 10.

Les volets 8A et 8B ont chacun une forme semi-circulaire et sont chacun muni de deux oreilles d'articulation 14 aux extrémités respectives de leur bord rectiligne, chaque oreille 14 étant montée sur un tourillon 15 porté par le corps 7.

Les volets 8A et 8B sont ici en acier, de préférence zingué, et sont revêtus sur chaque face d'un carton céramique 16, le carton situé du côté du rétreint 10 étant en outre revêtu d'un feutre céramique 17. Tout revêtement isolant et/ou intumescent adapté pourrait cependant être utilisé.

Les volets pourraient également être en matière silico calcaire, revêtus ou non d'un revêtement d'isolant et/ou intumescent.

Comme on le voit sur la figure 2, il est prévu un ressort spiral 18 autour de chaque tourillon 15 pour solliciter chacun des volets 8A et 8B vers la position de fermeture, chaque ressort 18 étant maintenu sur un tourillon 15 grâce à une patte de retenue axiale 19 rivetée sur le corps 7.

Afin de maintenir les volets 8A et 8B en position d'ouverture, chacun de ces volets comporte un crochet 20 disposé de sorte que, quand les volets sont en position d'ouverture, les crochets 20 sont l'un en face de l'autre et peuvent chacun être accroché à une attache fusible 21 qui les maintient mutuellement.

L'attache fusible 21, faite par exemple en laiton associé à un alliage d'étain, est prévue pour céder au-delà du seuil de température précité, de sorte que sous l'effet des ressorts 18, les volets 8A et 8B passent à la position de fermeture montrée sur la figure 1 pour le volet 8B.

Dans la position de fermeture, chaque volet est immobilisé contre la paroi transversale du corps 7 qui borde le rétreint 10 par une patte 22 en acier élastique. Cette patte est rivetée par son extrémité amont au corps 7 et présente à l'extrémité aval une partie inclinée qui se trouve sur le trajet que suit le bout du volet correspondant lorsqu'il passe de la position d'ouverture à la position de fermeture, de sorte que chaque lame 22 fléchit lors du passage du volet puis reprend ensuite sa forme initiale où son extrémité vient derrière le volet qui est ainsi bloqué en position de fermeture.

Une tige 23 est fixée à chaque extrémité sur la partie du corps 7 qui forme le fond du rétreint 10, la tige 23 étant orientée parallèlement aux tourillons 15.

La tige 23 s'étend du côté de la cartouche opposé, par rapport aux tourillons 15, aux volets 8A et 8B dans la position d'ouverture.

L'axe de la tige 23 est déterminé par l'intersection d'un plan P₂₃ perpendiculaire à l'axe de la cartouche 3 et du plan P_{8A} du volet 8A. Le diamètre de la tige 23 est de préférence inférieur ou égal à l'épaisseur e du volet 8A. Cette conformation de la tige 23 est particulièrement avantageuse puisqu'elle limite la perte de charge induite par la présence de la tige 23 en situation de veille, tout en facilitant la prise en main et donc l'extraction de la coquille par le côté de révision, situé à droite de la figure 1. Deux pattes de clipsage opposées 24 orientées suivant une direction générale axiale sont rivetées chacune par une de leurs extrémités au corps 7 au niveau de sa partie formant le fond de la gorge 9. Chaque patte de clipsage 24 s'étend en saillie au-delà du corps 7 afin de pouvoir coopérer avec le bourrelet 4 qui sert à retenir la cartouche 3 à la coquille 2 une fois qu'elle y a été mise en place.

Le bourrelet 4 est positionné dans la coquille 2 de sorte que, dans la position assemblée dans laquelle la cartouche 3 est immobilisée dans la coquille 2 (figures 1 et 5), les volets 8A et 8B sont disposés de manière à pouvoir tous les deux s'étendre selon le plan transversal médian P₂ de la coquille 2. Un positionnement centré de la coquille 2 sur la cloison, comme représenté sur la figure 5, permet ainsi de s'assurer que, dans la position de fermeture, les volets s'étendront bien dans le plan médian de la cloison. Avantageusement, l'efficacité du dispositif coupe-feu sera donc identique que le foyer d'incendie soit situé d'un côté de la cloison ou de l'autre.

On va maintenant décrire plus particulièrement les pattes 24 à l'appui des figures 3 et 4. Ces pattes sont réalisées en acier élastique plié. Elles comportent chacune une base plane 25 présentant un trou de rivetage 26 et un index 27 engagé dans une lumière du corps 7, faisant un angle d'environ 110° par rapport à la base 25 à une extrémité de laquelle il se raccorde; un coin de retenue 28 se raccordant à l'autre extrémité de la base 25, le coin de retenue comportant deux parois 29 et 30 disposées à angle droit, la paroi 29 faisant un angle d'environ 160° par rapport à la base 25; et une rampe d'insertion 31 se raccordant au bout de la paroi 30, faisant un angle d'environ 130° par rapport à celle-ci.

Tous les angles précités sont mesurés du côté situé en haut sur la figure 4 (côté intérieur de la patte 24).

On voit, d'une façon générale, que la rampe d'insertion 31 de chaque patte 24 est inclinée vers l'aval et vers l'intérieur, que le coin de retenue 28 est en retrait par rapport à la rampe 31 avec sa paroi 30 qui est reliée à la rampe par son extrémité externe tandis qu'elle est inclinée vers l'amont et vers l'intérieur, que c'est par son extrémité amont que le coin 28 se raccorde à la base 25, et que le doigt 27 est relevé vers l'intérieur.

La patte 24 a une largeur sensiblement constante (voir figure 3), son extrémité aval située au bout de la rampe 31, étant arrondie alors que les bords de la base 25 sont taillés en biais entre le trou 26 et le doigt 27, qui est donc moins large que le reste de la patte 24.

L'index 27 sert à maintenir la patte 24 dans une position axiale, lui évitant de se dérober par rotation, ce qui empêcherait le clipsage.

Dans une variante non représentée de la cartouche 3, les pattes 24 sont remplacées par une patte similaire, mais où l'angle entre la base 25 et la paroi 29 du coin 28, est de180° (la paroi 29 est dans le même plan que la base 25), où la largeur de la patte est constante et où l'index 27 est remplacé par un index formé par une étroite portion bombée de la base 25.

Pour mettre en place la cartouche 3 dans la coquille 2, on saisit celle-ci par la tige 23 et on l'enfonce dans l'alésage de la coquille 2 par l'extrémité amont de celle-ci (la plus éloignée du bourrelet 4), avec les pattes de clipsage 24 qui rentrent les premières dans l'alésage.

La cartouche 3 progresse avec un frottement dû à la coopération entre les lèvres du joint 11 et la paroi latérale de la coquille, jusqu'à ce que les rampes d'insertion 31 des pattes 24 rencontrent le bourrelet 4.

Du fait de l'inclinaison que présentent ces rampes (vers l'aval et vers l'intérieur), la coopération entre les rampes 31 et le bourrelet 4 a pour effet que les lames 24 fléchissent vers l'intérieur lors de la poursuite du mouvement d'enfoncement jusqu'à ce que l'arrondi 32 entre la rampe 31 et la paroi 30 vienne sur la paroi interne 33 du bourrelet 4. L'arrondi 32 glisse ensuite sur la paroi 33, et lorsque le bout de celle-ci est atteint, la patte 24 se détend et les parois 30 et 29 de son coin 28 viennent se mettre respectivement en regard des parois 34 et 33 du bourrelet 4. On est alors dans la position montrée sur la figure 1.

On voit que la cartouche 3 est alors fixée dans la coquille 2, la venue en butée du corps 7 contre le bourrelet 4 empêchant que l'on puisse enfoncer davantage la cartouche 3, alors que la coopération entre les pattes 24 et le bourrelet 4 exerce un effort de retenue empêchant le retrait de la cartouche 3, à moins d'exercer un effort important permettant la flexion des pattes 24 pour les libérer du bourrelet 4.

En pratique, cet effort est suffisamment important pour éviter tous risques qu'il y ait un décrochage de la cartouche 3 alors que le réseau aéraulique est en service, y compris lorsque la coquille 2 est installée verticalement avec la cartouche 3 en-dessous du bourrelet 4.

Bien évidemment, de même que pour mettre en place la cartouche 3 dans la coquille 2, on effectue la manoeuvre d'extraction de cette cartouche en la saisissant par la tige 23.

On va maintenant expliquer à l'appui de la figure 5 comment l'on procède à la mise en place d'un ensemble coupe-feu 1 dans un réseau aéraulique.

On pratique tout d'abord dans la cloison 35 que doit traverser le réseau, par exemple une paroi en béton de 110 mm d'épaisseur, une ouverture 36 ayant un diamètre légèrement supérieur au diamètre extérieur de la coquille 2, par exemple une ouverture ayant un diamètre supérieur de 40 mm au diamètre extérieur de la coquille.

La coquille 2 est ensuite positionnée de manière centrée dans cette ouverture, aussi bien axialement que latéralement, puis l'on scelle la coquille 2 dans la cloison 35 au moyen d'un jointoiement périphérique 37 réalisé au plâtre.

Le raccordement de la coquille 2 au reste du réseau se fait à chaque extrémité grâce à un manchon mâle à joint caoutchouc 38 qui permet de raccorder un conduit normalisé, par exemple un conduit 39 rigide spiralé comme montré à gauche sur la figure 5 ou un conduit semi-rigide 40 comme montré à droite.

Bien entendu, il faut déposer le conduit 40 et le manchon 38 pour procéder au montage et au démontage de la cartouche 3, notamment pour les visites périodiques de contrôle et d'entretien.

De nombreuses autres variantes sont possibles et on rappelle à cet égard que l'invention ne se limite pas aux exemples décrits et représentés.

En particulier, la coquille 2 peut être conçue pour, en service, ne pas être positionnée de manière centrée par rapport au plan médian P₃₅ de la cloison. Comme représenté sur la figure 7, le moyen détrompeur, en l'occurrence l'autocollant 41, est alors adapté de manière à pouvoir garantir néanmoins que, dans la position de fermeture, les volets s'étendront dans le plan transversal médian P₃₅ de la cloison.

La coquille n'est pas non plus limitée à une coquille 2 telle que représentée sur la figure 1. En particulier, la coquille peut être en tôle, comme représenté sur la figure 8. Sur cette figure 8, des références identiques à celles de la figure 1, mais affectées d'un signe "prime" ont été utilisées pour désigner des organes analogues. Ces organes ne sont donc pas décrits à nouveau de manière détaillée.

Dans le mode de réalisation de la figure 8, des bourrelets annulaires 50 et 52, disposés à égale distance des extrémités longitudinales de la coquille 2' facilitent le positionnement axial centré de la coquille 2' dans la cloison.

Les bourrelets annulaires 50 et 52 peuvent également faciliter la fixation des conduits aérauliques après fixation de la coquille 2' dans la cloison.

Les moyens de butée sont constitués par deux pions 4' faisant saillie, sensiblement radialement, à la surface intérieure de la coquille 2', et fixés, par exemple par rivetage, sur cette surface. Les deux pions sont ici disposés selon un diamètre de la coquille 2'.

Une cartouche 3', représentée très schématiquement, est disposée en butée sur les pions 4'. La cartouche 3' est représentée dans la position de fermeture où les volets 8A' et 8B' s'étendent dans le plan P₃₅ de la cloison.

Dans toute la description, par « comportant un » il y a lieu de comprendre « comportant au moins un », sauf si le contraire est spécifié.

## Revendications

1. Cartouche (3) coupe-feu comportant :
- un organe d'obturation (8A, 8B) mobile entre une position d'ouverture et une position de fermeture, et
- une poignée (23) s'étendant, dans la position d'ouverture, dans le prolongement dudit organe d'obturation.

2. Cartouche selon la revendication précédente, dans laquelle l'organe d'obturation comporte un volet (8A) sensiblement plan et agencé de manière que, dans un plan de projection perpendiculaire au plan (P_{8A}) dudit volet (8A) dans la position d'ouverture, au moins 50 % de la surface de la projection de la poignée est inclus dans la projection dudit volet (8A).

3. Cartouche selon la revendication précédente, dans laquelle au moins 70 % de la surface de la projection de la poignée est inclus dans la projection dudit volet (8A).

4. Cartouche selon la revendication précédente, dans laquelle 100 % de la surface de la projection de la poignée est inclus dans la projection dudit volet (8A).

5. Cartouche selon l'une quelconque des revendications précédentes, dans laquelle la poignée présente la forme d'une tige.

6. Cartouche selon la revendication précédente, selon laquelle l'organe d'obturation comporte un volet (8A), l'épaisseur de la tige étant inférieure à l'épaisseur dudit volet.

7. Cartouche selon l'une quelconque des revendications précédentes, dans laquelle l'organe d'obturation comporte deux volets semi-circulaires parallèles à l'axe de la cartouche dans la position d'ouverture et transversaux à l'axe de la cartouche dans la position de fermeture.

8. Cartouche selon l'une quelconque des revendications précédentes, dans laquelle l'organe d'obturation comporte des volets qui s'étendent, dans la position d'ouverture, de part et d'autre d'un plan médian de la cartouche, à égale distance dudit plan médian.

9. Cartouche selon l'une quelconque des revendications précédentes, dans laquelle l'organe d'obturation comporte deux volets montés à rotation sur des tourillons (15) portés par un corps (7) de la cartouche, la poignée s'étendant du côté de la cartouche opposé, par rapport auxdits tourillons, auxdits volets, dans la position d'ouverture.

10. Ensemble coupe-feu comportant une cartouche coupe-feu selon l'une quelconque des revendications précédentes et une coquille (2) de montage de ladite cartouche, ledit ensemble comportant des moyens de butée aptes à bloquer axialement la cartouche (3) dans la coquille (2), la poignée présentant la forme d'une tige dont les deux extrémités sont fixées à la surface intérieure du corps de la cartouche du côté de l'organe d'obturation par lequel la cartouche peut être extraite de la coquille.
